(19)

Europäisches Patentamt

European Patent Office

Office européen des brevets

(11)  EP 2 884 405 A1

(12)  EUROPEAN PATENT APPLICATION

(43) Date of publication:
17.06.2015  Bulletin 2015/25

(51) Int Cl.:
*G06F 17/30* (2006.01)

(21) Application number: 13306709.0

(22) Date of filing: 12.12.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Thomson Licensing
92130 Issy-les-Moulineaux (FR)

(72) Inventors:
• Filoche, Thierry
  35576 Cesson-Sévigné (FR)

• Langlois, Tristan
  35576 Cesson-Sévigné (FR)
• Humbert, Frédérique
  35576 Cesson-Sévigné (FR)
• Gallardo, Patrick
  35140 Vendel (FR)

(74) Representative: Huchet, Anne
  Technicolor
  1, rue Jeanne d'Arc
  92443 Issy-les-Moulineaux Cedex (FR)

(54)  **Method and apparatus for classifying a multimedia file**

(57)  A method and an apparatus for classifying multimedia file are described. The method comprises the steps of: obtaining at least one feature of the first multimedia file; determining at least one second multimedia file which is relevant to the first multimedia file according to the obtained at least one feature; attributing at least one parameter for classification of the first multimedia file to the first multimedia file, wherein the at least one parameter is weighted as a statistical function of the occurrence of the at least one parameter for the at least one second multimedia file.

```
┌─────────────────────────────┐
│ Select a movie for the      │   S101
│ classification              │
└─────────────────────────────┘
              │
              ▼
┌─────────────────────────────┐
│ Obtain information on the   │   S102
│ directors and the actors of │
│ the selected movie          │
└─────────────────────────────┘
              │
              ▼
┌─────────────────────────────┐
│ Obtain relevant movies for  │   S103
│ each actor & director and   │
│ the genre attribution for   │
│ the movies from the metadata│
│ source                      │
└─────────────────────────────┘
              │
              ▼
┌─────────────────────────────┐
│ Calculate a global          │   S104
│ distribution of genres for  │
│ each director and actor     │
│ according to the occurrences│
│ of the genres of relevant   │
│ movies                      │
└─────────────────────────────┘
              │
              ▼
┌─────────────────────────────┐
│ Attribute weighted genres   │   S105
│ to the movie according to   │
│ statistical result of the   │
│ global distribution of      │
│ genres of the determined    │
│ directors and actors        │
└─────────────────────────────┘
```

Fig.1

EP 2 884 405 A1

**Description**

## TECHNICAL FIELD

The present invention generally relates to the processing of multimedia content. In particular, the present invention relates to a method and apparatus for classifying a multimedia file.

## BACKGROUND

In the computer processing of multimedia content, there is a need in some applications to classify a multimedia file according to one or more criteria. The result of the classification can be used, for example, in the searching and customized service providing of the multimedia content.

For example, some current systems classify or characterize audiovisual content (database online, VOD catalogs, TV guide ...) with one or more genres. The information generated by the classification is relevant to the audiovisual content and can be used to provide the user with features such as searching or providing the audiovisual content by genres. Some available online databases (websites) to date which have such features are listed below:

> *http://www.imdb.com/*
> *http://www.imineo.com/*
> *http://www.universcine.com/*
> *http://www.themoviedb.org/*
> *http://www.allocine.fr/*
> *http://www.freebase.com/*
> *http://www.filmotv.fr/*
> *http://www.videoavolonte.com/*
> *http://www.vodmania.com/*
> *http://www.warnerbors.fr/*
> *http://mubi.com/*

Some of the above websites, such as *http://www.filmotv.fr*, *associate* only one genre to a movie. Some other websites, *http://www.imdb.com* for example, may combine several genres into one movie for the classification. However, the genres for one movie are not prioritized. That is, all the genres for one movie are at the same level.

The website *http://www.vodmania.com* offers to search a movie by a genre and then filter the result by a sub-genre. But the genre and the sub-genre cannot be combined for a searching, in which case no result will be generated.

Known technologies in this field only used a limited number of criteria to classify multimedia content. In addition, the level of relevancy of the criteria to the multimedia content is not considered or used effectively.

## SUMMARY

In view of the above problem in the conventional technologies, the invention provides a method and apparatus which can classify multimedia content taking into account of more than one criteria and their level of relevancy to the multimedia content.

According to one aspect of the invention, a method for classifying a first multimedia file is provided. The method comprises the steps of: obtaining at least one feature of the first multimedia file; determining at least one second multimedia file which is relevant to the first multimedia file according to the obtained at least one feature; attributing at least one parameter for classification of the first multimedia file to the first multimedia file, wherein the at least one parameter is weighted as a statistical function of the occurrence of the at least one parameter for the at least one second multimedia file.

According to one aspect of the invention, an apparatus for classifying a first multimedia file is provided. The apparatus comprises: a processor configured to: obtain at least one feature of the first multimedia file; determine at least one second multimedia file which is relevant to the first multimedia file according to the obtained at least one feature; attribute at least one parameter for classification of the first multimedia file to the first multimedia file, wherein the at least one parameter is weighted as a statistical function of the occurrence of the at least one parameter for the at least one second multimedia file.

According to one aspect of the invention, a computer program product downloadable from a communication network and/or recorded on a medium readable by computer and/or executable by a processor is provided. The computer program product comprises program code instructions for implementing the steps of the method according to one aspect of the invention.

According to one aspect of the invention, a Non-transitory computer-readable medium comprising a computer program product recorded thereon and capable of being run by a processor. The Non-transitory computer-readable medium includes program code instructions for implementing the steps of a method according to one aspect of the invention.

It is to be understood that more aspects and advantages of the invention will be found in the following detailed description of the present invention.

## BRIEF DESCRIPTION OF THE DRAWINGS

The accompanying drawings are included to provide further understanding of the embodiments of the invention together with the description which serves to explain the principle of the embodiments. The invention is not limited to the embodiments.

In the drawings:

Figure 1 is a flow chart showing a method for classifying a movie with a plurality of weighted genres according to an embodiment of the invention;

Figures 2A-2C are exemplary diagrams showing a table recording the relevant movies of Brad Pitt and the genre attribution of the relevant movies from the online database *www.themoviedb.org* according to an embodiment of the invention;

Figures 3A-3C are exemplary diagrams showing a table recording the relevant movies of Cate Blanchett and the genre attribution of the relevant movies from the online database *www.the moviedb.org* according to an embodiment of the invention;

Figures 4A-4C are exemplary diagrams showing a table recording the relevant movies of Tilda Swintonand and the genre attribution of the relevant movies from the online database *www.themoviedb.org* according to an embodiment of the invention;

Figures 5A-5C are exemplary diagrams showing a table recording the relevant movies of David Fincher and the genre attribution of the relevant movies from the online database *www.themoviedb.org* according to an embodiment of the invention;

Figures 6A-6C are exemplary diagrams showing weighted genres attributed to the selected movie according to an embodiment of the invention;

Figures 7A-7C are exemplary diagrams showing the calculated distance between two movies with the weighted genres attributed to the movies according to an embodiment of the invention; and

Figure 8 is block diagram showing a computer device on which the method for classifying a movie with a plurality of weighted genres according to an embodiment of the invention may be implemented.

## DETAILED DESCRIPTION

An embodiment of the present invention will now be described in detail in conjunction with the drawings. In the following description, some detailed descriptions of known functions and configurations may be omitted for conciseness.

An embodiment of the invention provides a method for classifying multimedia content with a plurality of criteria and wherein each of the plurality of criteria is attributed with a weighting value.

Next, the method of the embodiment of the present invention will be described in the context of classifying a movie with a plurality of weighted genres.

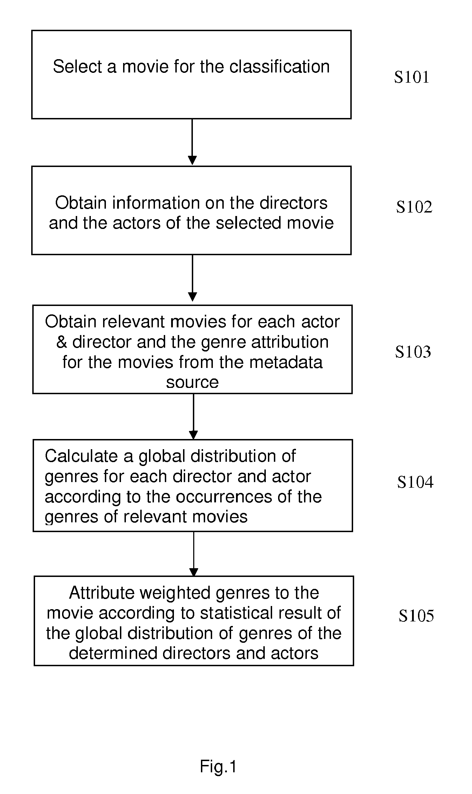

Figure 1 is a flow chart showing a method for classifying a movie with a plurality of weighted genres according to an embodiment of the invention.

As shown in Figure 1, in step S101, it selects a movie for the classification. The movie can be selected from a metadata source which for example can be a VOD catalog provider or a website which references movies. The online databases (websites) described above can be used as the metadata source. In one example, a movie "The Curious Case of Benjamin Button" can be selected from the website *www.themoviedb.org*. In the following description, the method will be described with reference to this movie.

Next, at step S102, it obtains information on the directors and the actors of the selected movie. The information on the directors and the actors of the selected movie can be obtained from the video catalog of the metadata source mentioned in the step S101, the website *www.themoviedb.org* in this example. It can be appreciated that normally the metadata provided by the metadata source will provide information on the director, actor list, release date, production country, genre attribution of the movie, and so on. In the example described above, information on the directors and actors of the movie "The Curious Case of Benjamin Button" can be obtained from the metadata provided by the website *www.themoviedb.org*. In a normal case like this example, a movie only has one director. But it can be appreciated that the relevant information about the additional director(s) can also be obtained from the metadata if a movie has more than one director. Normally a movie will be acted by a plurality of actors. It can be appreciated that in the step S102 it is not necessary to obtain the information of the total casting including background actors of the movie. It can obtain only the major actors of the movie for purpose of reducing the amount of operation of the following steps. For the movie "The Curious Case of Benjamin Button" in this example, it can obtain from the video catalog of the website *www.themoviedb.org* that the movie is directed by David Fincher and the major actors are Cate Blanchett, Brad Pitt and Tilda Swinton.

At step S103, it obtains, for each of the determined directors and actors, the relevant movies which are directed by the director or in which the actor is acting and the genre attribution for the relevant movies from the metadata source. In this example, a two dimensional table can be used to record and analyze said relevant movies to obtain the genre attribution of the relevant movies. Each table has in row the list of relevant movies which were directed by a director or in which an actor is playing and in column the list of genres provided by the metadata source, that is, the website *www.themoviedb.org*. The value of a cell (movie 'i', genre 'j') of the table is set "1" when the genre 'j' is indicated as genre of the movie 'i' by the metadata source.

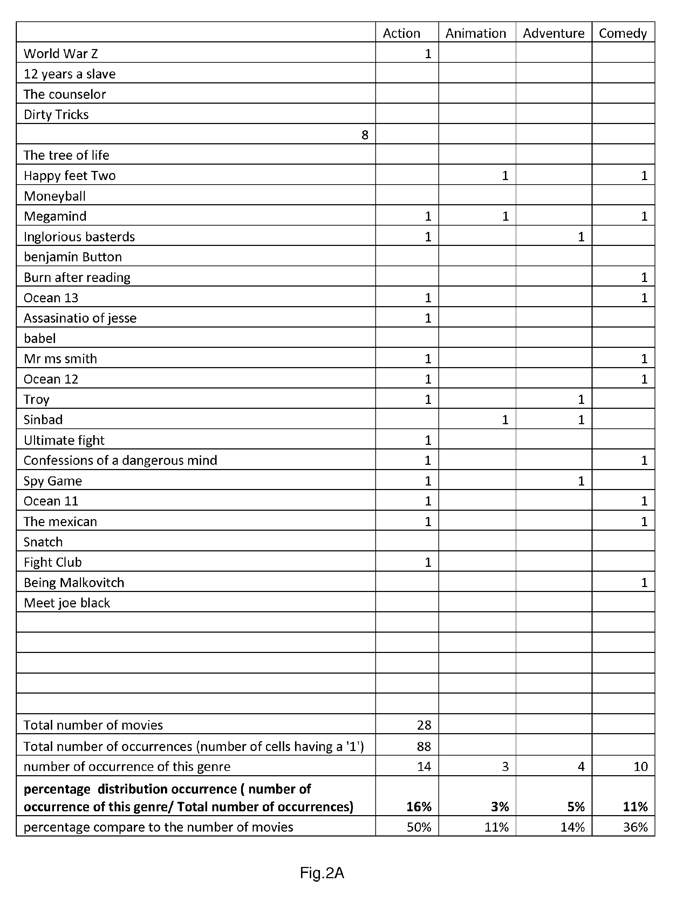

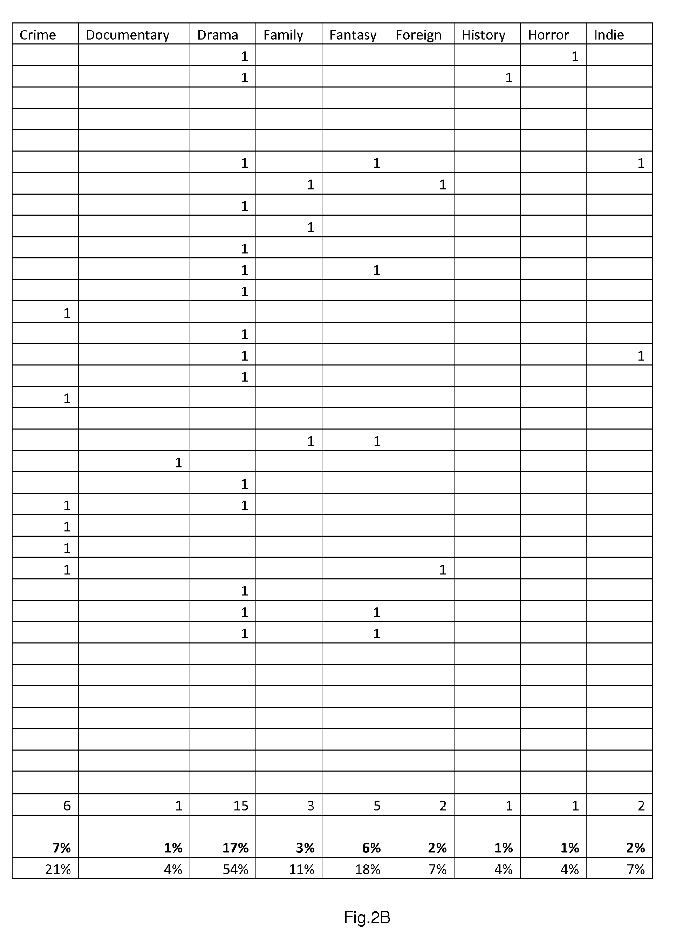

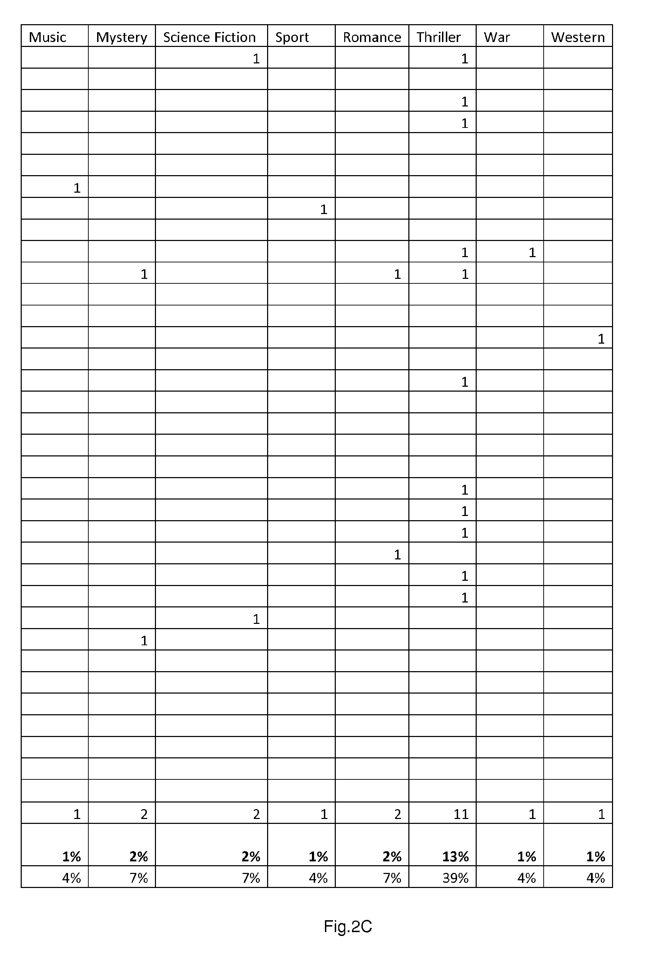

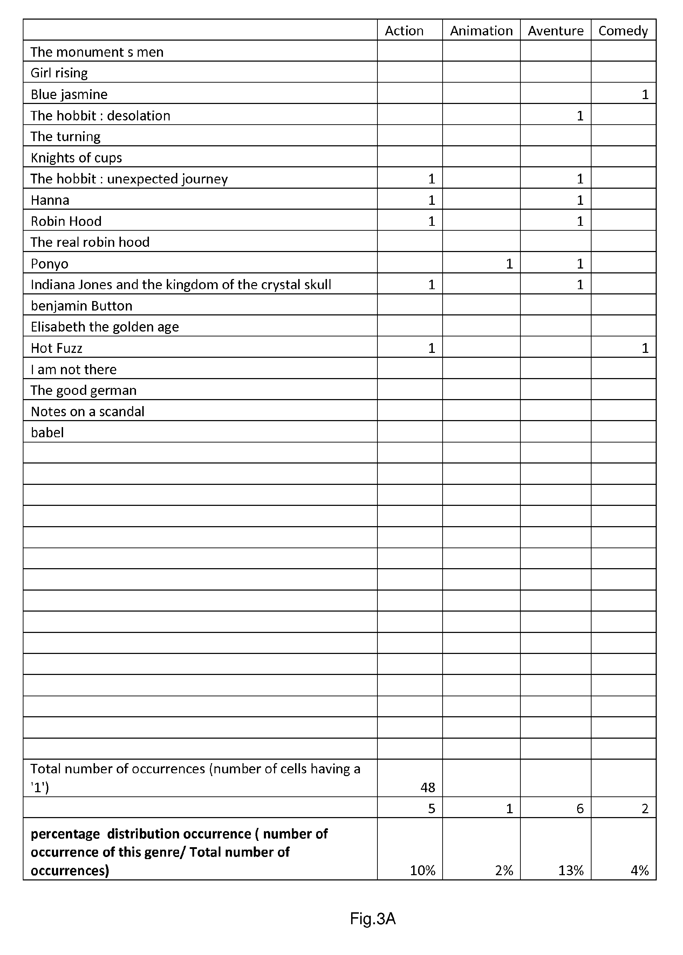

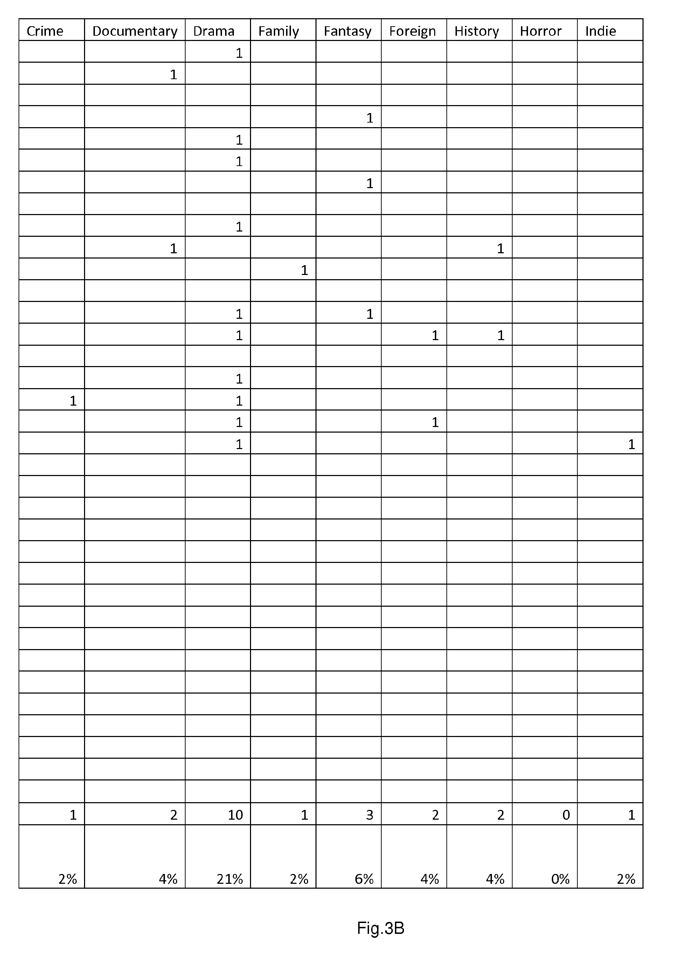

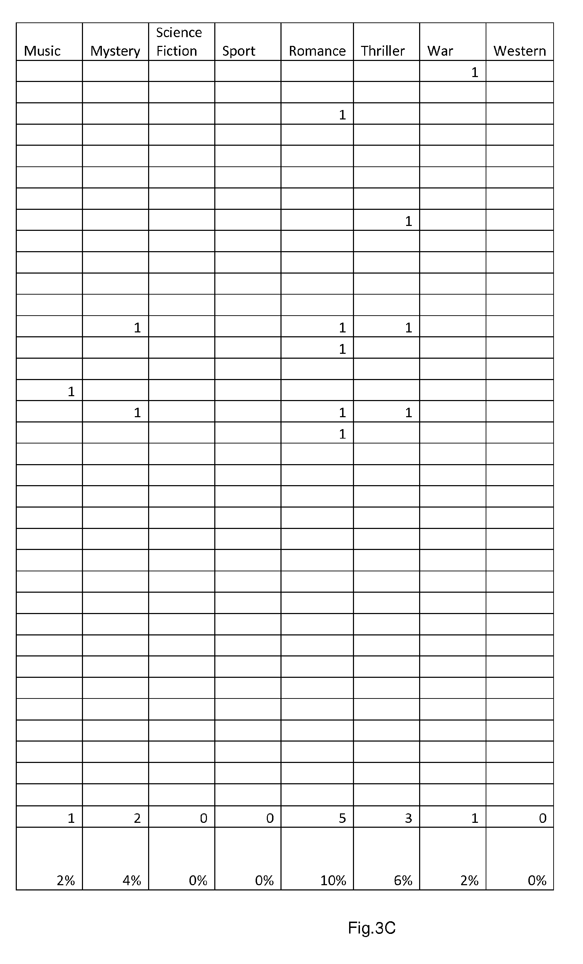

Figures 2A-2C are exemplary diagrams showing a table recording the relevant movies of Brad Pitt and the genre attribution of the relevant movies from the online database *www.themoviedb.org* according to an embodiment of the invention. It should be noted that Figures 2A-2C jointly show the completed table for the actor Brad Pitt. Tablet in Figure 2B is continuous from that in Figure 2A in the direction of the columns and Tablet in Figure 2C is continuous from that in Figure 2B in the direction of the columns. This is the same for the following Figures 3A-3C, 4A-4C, 5A-5C, 6A-6C and 7A-7C. As shown in Figure 2A-2C, in row of the table, it lists all the relevant movies in which Brad Pitt is acting, for example, "World War Z", "12 years a slave" and so on. In column of the table, it lists all the available genres provided by the website *www.themoviedb.org*, for example, Action, Animation, Drama, Fantasy, Mystery, Romance, Thriller and so on. The value of a cell (movie 'i', genre 'j') in the table shown in Figures 2A-2C is set "1" when the genre 'j' is indicated as genre of the movie 'i' by the online database *www.themoviedb.org*. For example, the relevant movie "World War Z" is attributed with the genres "Action", "Drama", "Horror", "Science Fiction" and "Thriller" by the online database *www.themoviedb.org*. value of each of the corresponding cells is set "1" in the table.

It can be appreciated that, for each director and actor determined in the step S102, a table described above is generated. Figures 3A-3C, 4A-4C and 5A-5C show respectively a table recording the relevant movies of the actors Cate Blanchett, Tilda Swintonand and the director David Fincher and the genre attribution of the relevant movies from the website *www.themoviedb.org* according to an embodiment of the invention. No repetitive description will be given in this respect.

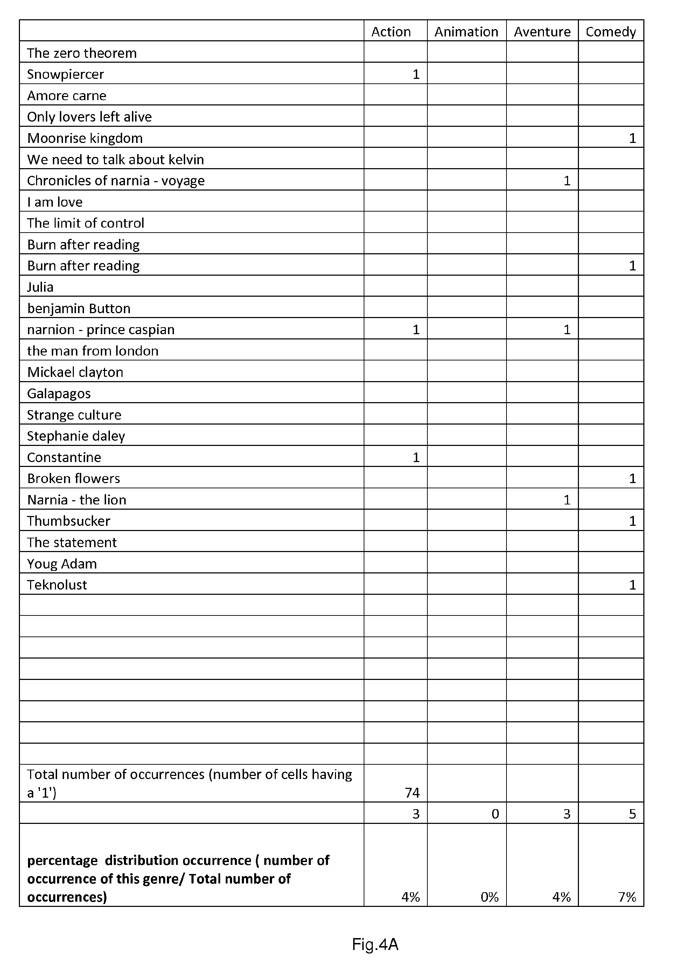

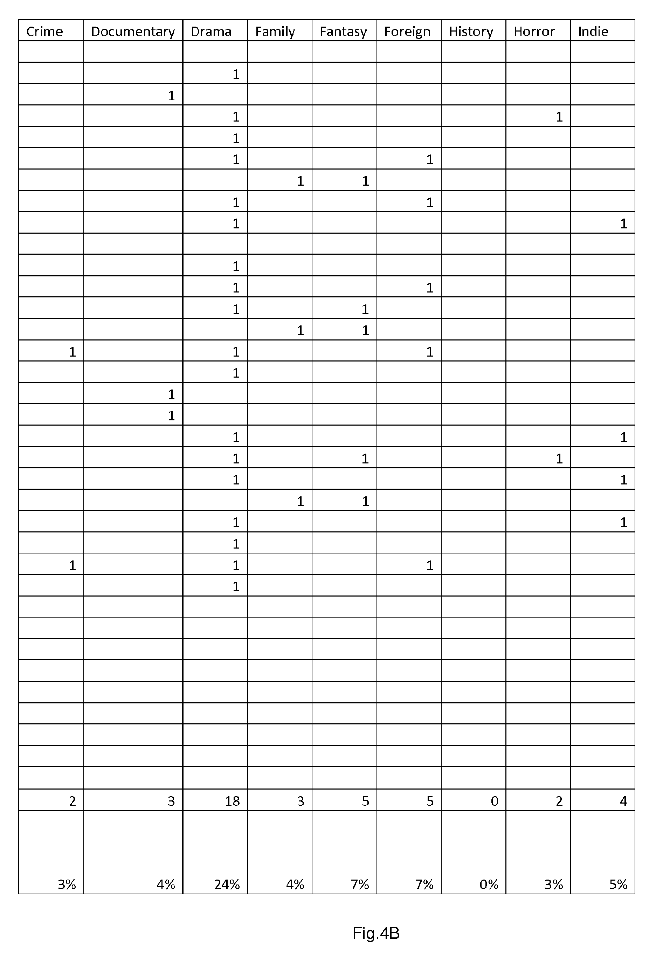

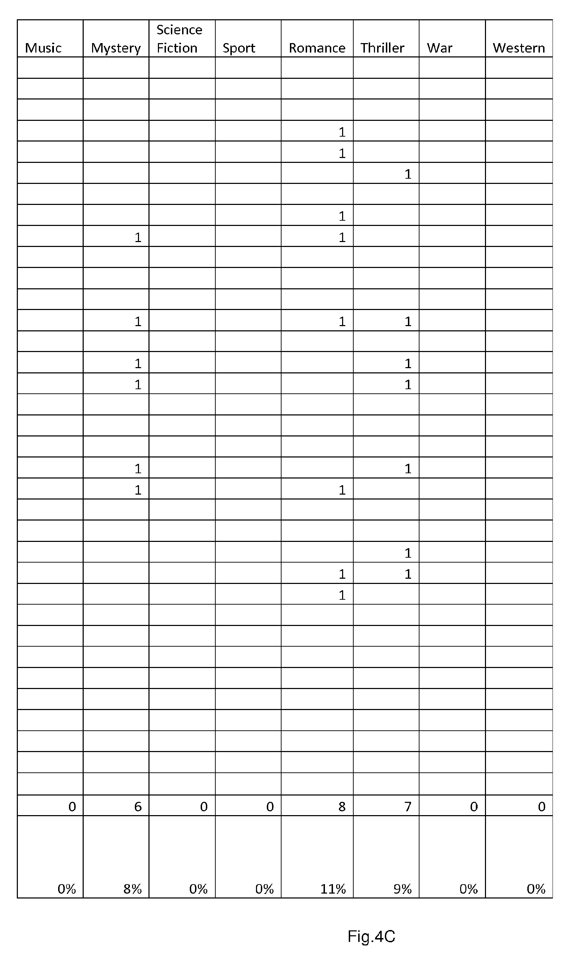

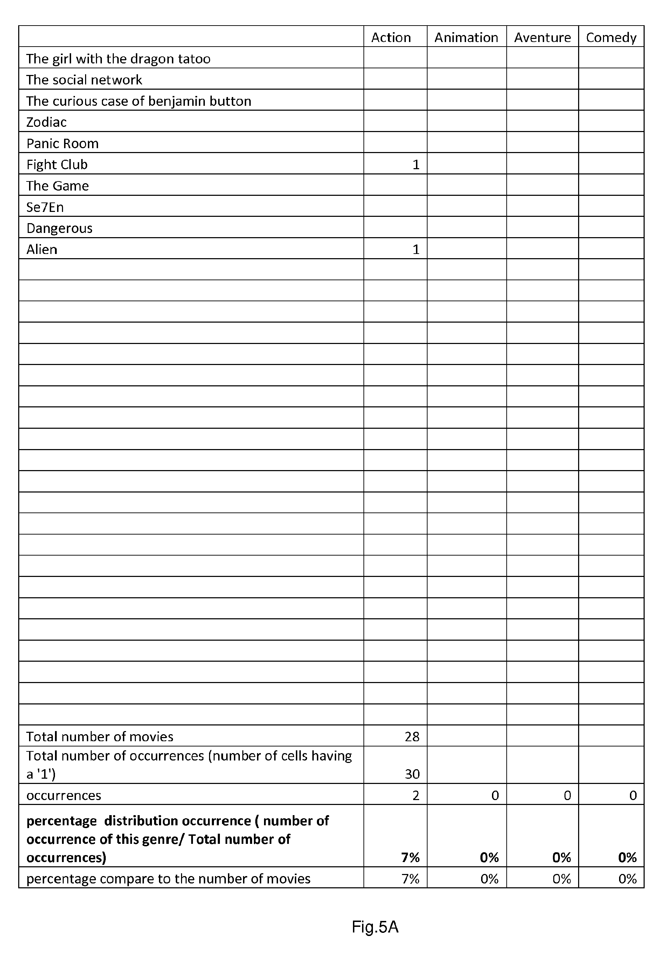

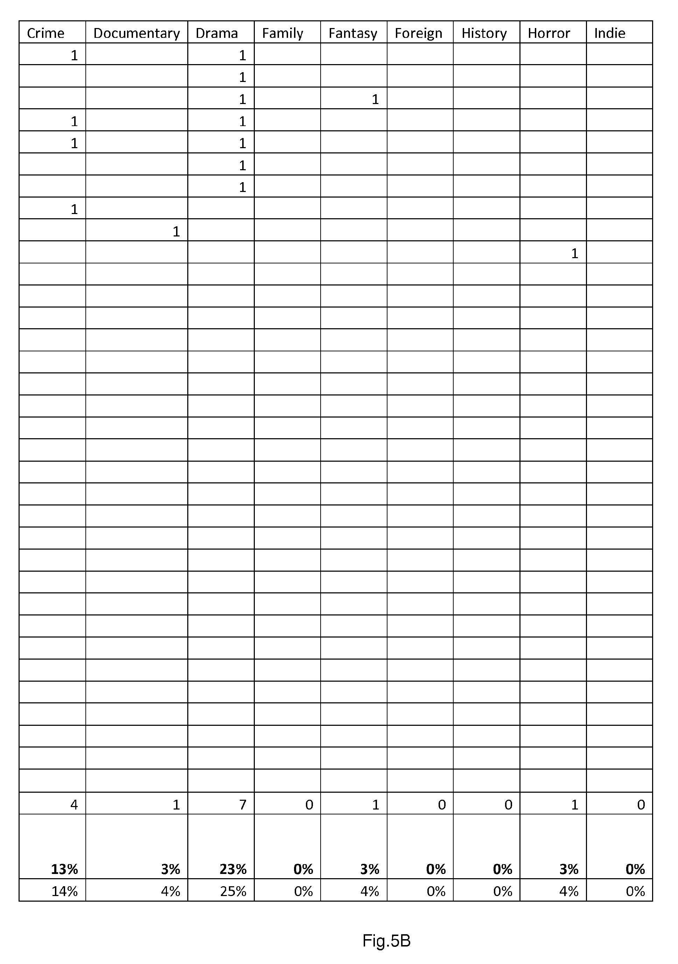

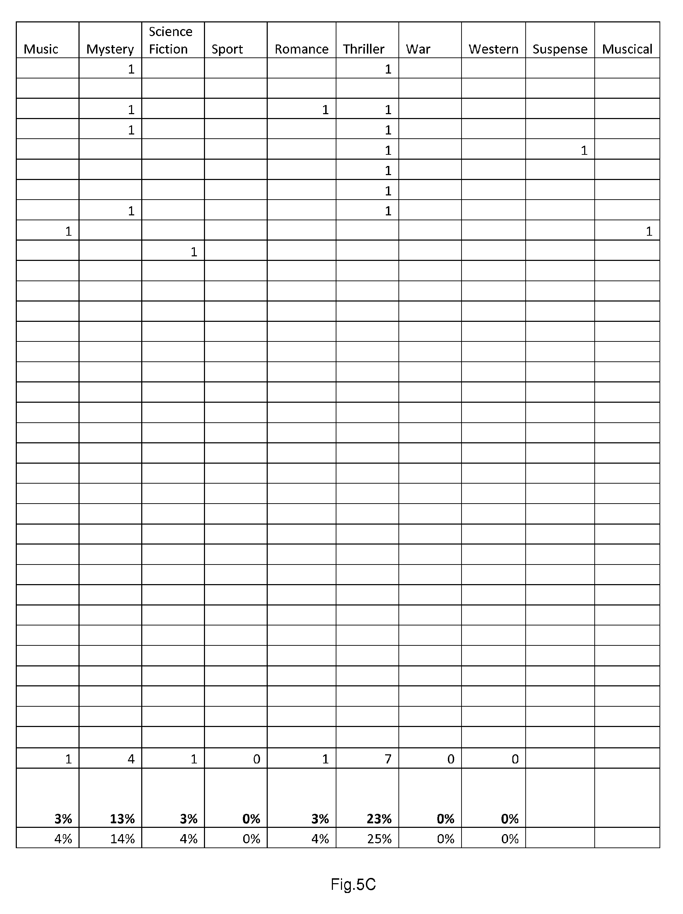

At the next step S104, it calculates, for each director and actor, a global distribution of genres according to the above occurrences of the genres in the table. It can be appreciated that, when all relevant movies in the tables generated in the step S103 have been filled, a number of occurrences of the genre of relevant movies can be obtained for each genre. Based on this information, a global distribution of genres for each director or actor can be calculated. As shown in Figures 2A-2C, the second row from the bottom of the table indicates a global distribution of genres in the form of percentage for Brad Pitt, which is determined by the number of occurrence of a genre versus a total number of occurrences. In Figures 2A-2C, the last row of the table shows a test for computing the ratio between the number of occurrence for a specific genre versus the total number of movies. But the drawback for the result of this row is that the sum of percentage in this case exceeds 100%, due to the fact that movies have several genre. The last rows of the tables in Figures 3A-3C, 4A-4C and the second row from the bottom of the table in Figures 5A-5C show respectively the obtained global distribution of genres for Cate Blanchett, Tilda Swintonand and the director David Fincher.

At the next step S105, it attributes weighted genres to the selected movie according to the statistical result of the global distribution of genres of the determined directors and actors.

The selected movie can be attributed with the same genres provided by the metadata source to this movie or with an extended list of available genres.

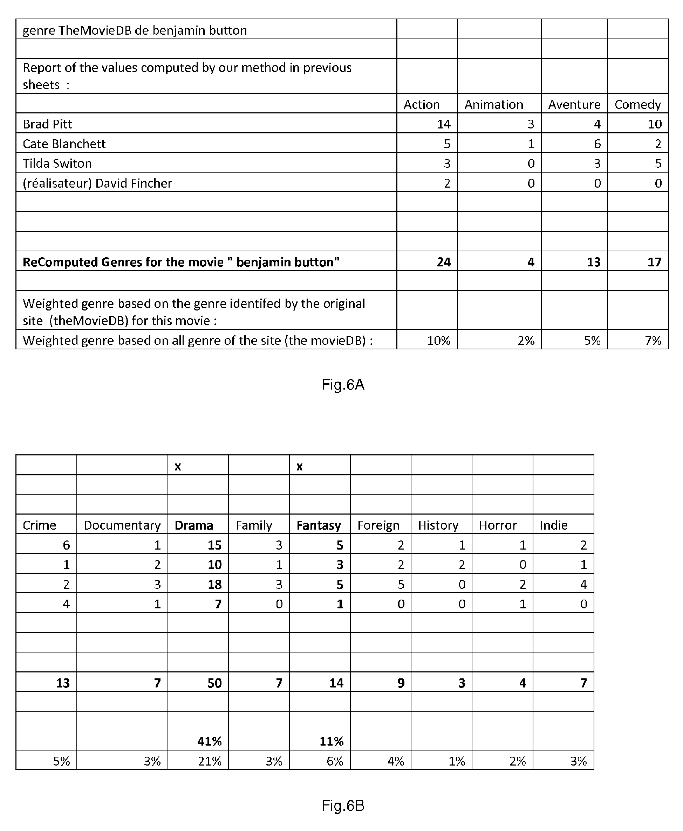

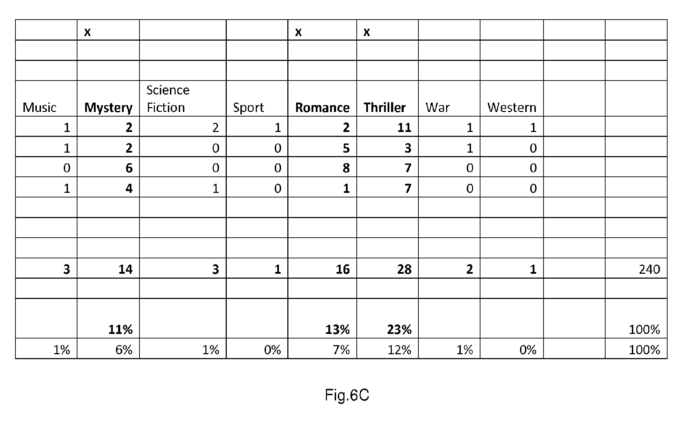

In this example, the website www.themoviedb.org classifies the movie "The Curious Case of Benjamin Button" with five genres, which are Drama, Fantasy, Mystery, Romance and Thriller. The method of the embodiment of the invention can attribute these five genres to this movie, with each genre assigned a weighting value according to the statistical result of the global distribution of genres of the determined directors and actors in the relevant movies. Figure 6 is an exemplary diagram showing weighted genres attributed to the selected movie according to an embodiment of the invention. As shown in the second row from the bottom of the table shown in Figures 6A-6C, the attribution of the genres to the movie "The Curious Case of Benjamin Button" is determined based on the five weighted genres provided by the website www.themoviedb.org according to the statistical result of the global distribution of genres of the director and actors. As shown in Figures 6A-6C, with the method according to the embodiment of the invention, the weighting value of the each genre is determined respectively as follows: Drama (41%), Fantasy (11%), Mystery (11 %), Romance (13%) and Thriller (23%). Thus it can be seen, the given movie can be attributed with these five genres, each of which is weighted according to its statistical result of percentage of the occurrence in the above tables. In this case, although the same genres are used for the classification of the movie, the distribution between these five genres can be improved with the method according to the embodiment of the invention. For example, it can be inferred that, form the genres attributed by the method according to the embodiment of the invention, that Drama and Thriller are the two main important genres for this selected movie.

The attribution of genres to the selected movie can also be based on an extended list of genres over the five genres which are attributed to the movie "The Curious Case of Benjamin Button" by the website www.themoviedb.org. As shown in the first row from the bottom of the table shown in Figures 6A-6C, the given movie can be attributed with an extended list of genres, each of which is weighted according to the statistical result of the global distribution of genres of the director and actors in the relevant movies. The result is as follows: Action (10%), Animation (2%), Adventure (5%), Comedy (7%), Crime (5%), Documentary (3%), Drama (21 %), Family (3%), Fantasy (6%), Foreign (4%),History (1%), Horror(2%), Indie (3%), Music (1%), Mystery (6%), Science Fiction (1%), Sport (0%), Romance (7%), Thriller (12%), War (1%), Western (0%). It can be seen from the result of this example that the genre "Action", despite that it has not been proposed by the website www.themoviedb.org to this movie, is attributed to the movie "The Curious Case of Benjamin Button" with a weighting value 10%. This is probably an adapted genre for this movie.

In the above example, each actor has the same weight for determining weighted genres according to the statistical result of the global distribution of genres of the determined directors and actors in the relevant movies. However, in another example, a weight can be assigned to each actor according to his/her presence time in the movie for determining the weighted genres according to the statistical result of the global distribution of genres of the actor. The weight assigned to an actor can be in directly proportional to the presence time in the movie.

As described above, an embodiment of the present invention provide a method for classifying a movie with a plurality of weighted genres. The genres and their weights are determined by a statistical calculation of the genre distribution of the directors and actors of the selected movie in the relevant movies.

The weighted genres attributed to a movie according to the embodiment of the invention can be used to compute a distance between two movies. Based on the distance, similar movies within a catalog can be determined, which are those with the smaller distance between them compare to all the other ones.

Below is an example for computing the distance.

Let :

x [genre 'i', movie 1] the value associated to the genre 'i' of movie 1
x [genre 'i', movie 2] the value associated to the genre 'i' of movie 2

The distance between these two movies can be determined by the following formula : Distance = Sum of the gaps in absolute value on each of the genre.

That is

$$Distance = \sum_{i=1}^{Number\ of\ genres} |\, x[genre(i), movie\ 1] - x[genre(i), movie\ 2]|$$

Preferably, the Euclidean distance will give a better result in the respect, as below:

$$Distance = \sqrt{\sum_{i=1}^{Number\ of\ genres} (x[genre(i), movie\ 1] - x[genre(i), movie\ 2])^2}$$

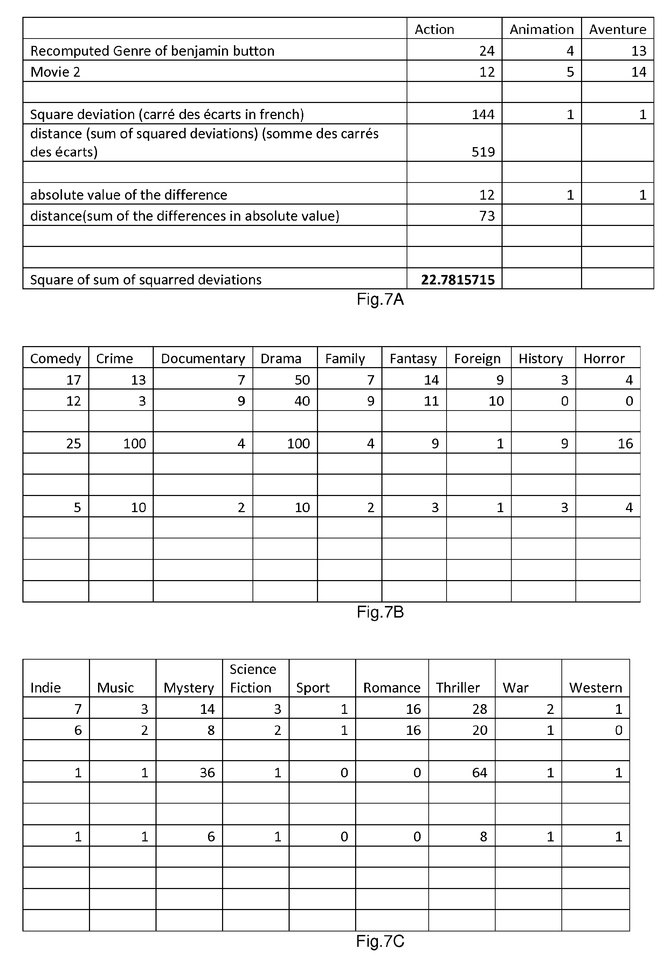

Figures 7A-7C are exemplary diagrams showing the calculated distance between the movie 1 and a movie 2 with the weighted genres attributed to the movies according to an embodiment of the invention. In this example, the movie 1 is the movie "The Curious Case of Benjamin Button" and the movie 2 is randomly selected.

As shown in Figures 7A-7C, the row of square deviation shows the result of the computation of:

$$(x[genre(i), movie\ 1] - x[genre(i), movie\ 2])^2$$

The row of distance (the sum of squared deviations) shows the result of the computation of:

$$\sum_{i=1}^{Number\ of\ genres} (x[genre(i), movie\ 1] - x[genre(i), movie\ 2])^2$$

The row of absolute value of the difference shows the result of the computation of:

$$|x[genre(i), movie\ 1] - x[genre(i), movie\ 2]|$$

The row of distance (the sum of the differences in absolute value) shows the result of the computation of:

$$\sum_{i=1}^{Number\ of\ genres} |x[genre(i), movie\ 1] - x[genre(i), movie\ 2]|$$

An embodiment of the invention provides a corresponding apparatus for implementing the method for classifying a multimedia file as described above. Generally, the apparatus comprises means for obtaining a feature of the multimedia file. As described above, the multimedia file can be a movie and the feature obtained can be the directors and actors of the movie.

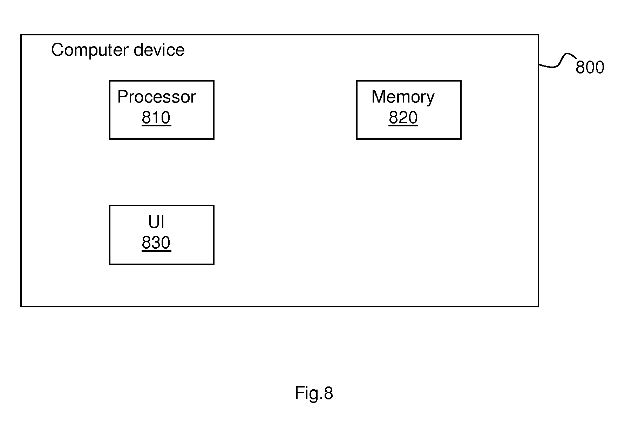

Figure 8 is block diagram showing a computer device 800 on which the method for classifying a movie with a plurality of weighted genres according to an embodiment of the invention may be implemented. The computer device 800 can be any kind of suitable computer or device capable of performing calculations, such as a standard Personal Computer (PC). The device 800 comprises at least one processor 810, RAM memory 820 and a user interface 830 for interacting with a user. The skilled person will appreciate that the illustrated computer is very simplified for reasons of clarity and that a real computer in addition would comprise features such as network connections and persistent storage devices.

With the user interface 830, a user can select a first multimedia file for the classification from a metadata source. As described in the method according to the embodiment of the invention, the first multimedia file can be a movie. A movie can be selected for example from a VOD catalog provider or a website which references movies.

The processor 810 comprises a first unit for obtaining at least one feature of the multimedia file. In the context of a movie, the at least one feature of the movie is for example the information on the directors and actors of the movie. The above information can also be obtained from the above metadata source. In one example, the result can be provided to the user by the user interface 830.

The processor 810 further comprises a second unit for determining at least one second multimedia file which is relevant to the first multimedia file according to the obtained at least one feature. In the context of a movie, the second multimedia file can be a relevant movie of the given movie which is directed by the directors or acted by the actors of the given movie.

The apparatus further comprises a third unit for attributing at least one parameter for classification of the first multimedia file to the first multimedia file. The at least one parameter is weighted as a statistical function of the occurrence of the at least one parameter for the at least one second multimedia file. In this example, the parameter can be a genre attributed to a movie for classifying the movie. A genre is weighted as a statistical function of its distribution for the at least one relevant movies.

An embodiment of the invention provides a computer program product downloadable from a communication network and/or recorded on a medium readable by computer and/or executable by a processor, comprising program code instructions for implementing the steps of the method described above.

An embodiment of the invention provides a non-transitory computer-readable medium comprising a computer program product recorded thereon and capable of being run by a processor, including program code instructions for implementing the steps of a method described above.

The invention can be implemented on a server which for example provides online multimedia service to user over Internet or local broadband network. The invention can classify multimedia content with more than one criteria and also considering the level of relevancy of the criteria to the multimedia content. The criteria for the classification and their level of relevancy to the multimedia can be determined according to the metadata from an independent metadata source, for example an online video website. However, the classification according to the invention will somehow adapt or improve the initial classification provided by the independent metadata source.

It is to be understood that the present invention may be implemented in various forms of hardware, software, firmware, special purpose processors, or a combination thereof. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

**Claims**

1. A method for classifying a first multimedia file, comprising
   obtaining at least one feature of the first multimedia file;
   determining at least one second multimedia file which is relevant to the first multimedia file according to the obtained at least one feature;
   attributing at least one parameter for classification of the first multimedia file to the first multimedia file, wherein the at least one parameter is weighted as a statistical function of the occurrence of the at least one parameter for the at least one second multimedia file.

2. Method according to claim 1, wherein the first multimedia file comprises a movie.

3. Method according to claim 2, wherein the at least one feature of the first multimedia file comprises information on the directors and actors of the movie, and the at least one second multimedia file is determined to be a movie which is directed by the at least one of the directors or acted by the at least one of the actors.

4. Method according to claim 2, wherein the at least one parameter comprises a genre of a movie.

5. Method according to claim 4, further comprising the steps of:

   obtaining information on the directors and the actors of the movie (S101, S102);
   obtaining, for each of the directors and actors, the relevant movies which are directed by the director or in which the actor is acting and the genre attribution for the relevant movies (S103);
   calculating, for each director and actor, a global distribution of genres according to the occurrences of the genres for the relevant movies(S104); and
   attributing weighted genres to the movie according to the statistical result of the global distribution of occurrence of genres of the determined directors and actors for the relevant movies.

6. Method according to claim 5, wherein the weight value of a genre is determined according to a statistical result of percentage of the occurrence of the genre of the determined directors and actors for the relevant movies.

7. Method according to claim 5, wherein the movie is provided online by a service provider.

8. Method according to claim 7, wherein the information on the directors and the actors, the relevant movies and the genre attribution for the relevant movies are obtained from the metadata provided by the service provider.

9. Method according to claim 5, the statistical result of the global distribution of genres of a determined actor for the relevant movies is calculated as a function of the presence time of the actor in the movie.

10. Method according to claim 5, further comprising determining a similarity between two movies according to a value calculated according to the weighted genres.

11. An apparatus for classifying a first multimedia file, comprising a processor configured to:

obtain at least one feature of the first multimedia file;
determine at least one second multimedia file which is relevant to the first multimedia file according to the obtained at least one feature;
attribute at least one parameter for classification of the first multimedia file to the first multimedia file, wherein the at least one parameter is weighted as a statistical function of the occurrence of the at least one parameter for the at least one second multimedia file.

12. Apparatus according to claim 11, further comprising a user interface for a user to select the first multimedia file and to display the result of classification.

13. Computer program product downloadable from a communication network and/or recorded on a medium readable by computer and/or executable by a processor, comprising program code instructions for implementing the steps of a method according to at least one of claims 1 to 10.

14. Non-transitory computer-readable medium comprising a computer program product recorded thereon and capable of being run by a processor, including program code instructions for implementing the steps of a method according to at least one of claims 1 to 10.

```
┌─────────────────────────────────┐
│                                 │
│  Select a movie for the         │      S101
│  classification                 │
│                                 │
└─────────────────────────────────┘
                 │
                 ▼
┌─────────────────────────────────┐
│                                 │
│  Obtain information on the      │      S102
│  directors                      │
│  and the actors of the          │
│  selected movie                 │
│                                 │
└─────────────────────────────────┘
                 │
                 ▼
┌─────────────────────────────────┐
│  Obtain relevant movies for     │
│  each actor                     │
│  & director and the genre       │      S103
│  attribution                    │
│  for the movies from the        │
│  metadata                       │
│  source                         │
└─────────────────────────────────┘
                 │
                 ▼
┌─────────────────────────────────┐
│  Calculate a global             │
│  distribution of                │
│  genres for each director and   │      S104
│  actor                          │
│  according to the occurrences   │
│  of the                         │
│  genres of relevant movies      │
└─────────────────────────────────┘
                 │
                 ▼
┌─────────────────────────────────┐
│  Attribute weighted genres to   │
│  the                            │
│  movie according to statistical │      S105
│  result of                      │
│  the global distribution of     │
│  genres of the                  │
│  determined directors and       │
│  actors                         │
└─────────────────────────────────┘
```

Fig.1

|  | Action | Animation | Adventure | Comedy |
|---|---|---|---|---|
| World War Z | 1 |  |  |  |
| 12 years a slave |  |  |  |  |
| The counselor |  |  |  |  |
| Dirty Tricks |  |  |  |  |
| 8 |  |  |  |  |
| The tree of life |  |  |  |  |
| Happy feet Two |  | 1 |  | 1 |
| Moneyball |  |  |  |  |
| Megamind | 1 | 1 |  | 1 |
| Inglorious basterds | 1 |  | 1 |  |
| benjamin Button |  |  |  |  |
| Burn after reading |  |  |  | 1 |
| Ocean 13 | 1 |  |  | 1 |
| Assasinatio of jesse | 1 |  |  |  |
| babel |  |  |  |  |
| Mr ms smith | 1 |  |  | 1 |
| Ocean 12 | 1 |  |  | 1 |
| Troy | 1 |  | 1 |  |
| Sinbad |  | 1 | 1 |  |
| Ultimate fight | 1 |  |  |  |
| Confessions of a dangerous mind | 1 |  |  | 1 |
| Spy Game | 1 |  | 1 |  |
| Ocean 11 | 1 |  |  | 1 |
| The mexican | 1 |  |  | 1 |
| Snatch |  |  |  |  |
| Fight Club | 1 |  |  |  |
| Being Malkovitch |  |  |  | 1 |
| Meet joe black |  |  |  |  |
|  |  |  |  |  |
|  |  |  |  |  |
|  |  |  |  |  |
|  |  |  |  |  |
|  |  |  |  |  |
| Total number of movies | 28 |  |  |  |
| Total number of occurrences (number of cells having a '1') | 88 |  |  |  |
| number of occurrence of this genre | 14 | 3 | 4 | 10 |
| percentage distribution occurrence ( number of occurrence of this genre/ Total number of occurrences) | 16% | 3% | 5% | 11% |
| percentage compare to the number of movies | 50% | 11% | 14% | 36% |

Fig.2A

| Crime | Documentary | Drama | Family | Fantasy | Foreign | History | Horror | Indie |
|---|---|---|---|---|---|---|---|---|
|  |  | 1 |  |  |  |  | 1 |  |
|  |  | 1 |  |  |  | 1 |  |  |
|  |  |  |  |  |  |  |  |  |
|  |  |  |  |  |  |  |  |  |
|  |  |  |  |  |  |  |  |  |
|  |  | 1 |  | 1 |  |  |  | 1 |
|  |  |  | 1 |  | 1 |  |  |  |
|  |  | 1 |  |  |  |  |  |  |
|  |  |  | 1 |  |  |  |  |  |
|  |  | 1 |  |  |  |  |  |  |
|  |  | 1 |  | 1 |  |  |  |  |
|  |  | 1 |  |  |  |  |  |  |
| 1 |  |  |  |  |  |  |  |  |
|  |  | 1 |  |  |  |  |  |  |
|  |  | 1 |  |  |  |  |  | 1 |
|  |  | 1 |  |  |  |  |  |  |
| 1 |  |  |  |  |  |  |  |  |
|  |  |  |  |  |  |  |  |  |
|  |  |  | 1 | 1 |  |  |  |  |
|  | 1 |  |  |  |  |  |  |  |
|  |  | 1 |  |  |  |  |  |  |
| 1 |  | 1 |  |  |  |  |  |  |
| 1 |  |  |  |  |  |  |  |  |
| 1 |  |  |  |  |  |  |  |  |
| 1 |  |  |  |  | 1 |  |  |  |
|  |  | 1 |  |  |  |  |  |  |
|  |  | 1 |  | 1 |  |  |  |  |
|  |  | 1 |  | 1 |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
| 6 | 1 | 15 | 3 | 5 | 2 | 1 | 1 | 2 |
|  |  |  |  |  |  |  |  |  |
| **7%** | **1%** | **17%** | **3%** | **6%** | **2%** | **1%** | **1%** | **2%** |
| 21% | 4% | 54% | 11% | 18% | 7% | 4% | 4% | 7% |

Fig.2B

| Music | Mystery | Science Fiction | Sport | Romance | Thriller | War | Western |
|---|---|---|---|---|---|---|---|
|  |  | 1 |  |  | 1 |  |  |
|  |  |  |  |  |  |  |  |
|  |  |  |  |  | 1 |  |  |
|  |  |  |  |  | 1 |  |  |
|  |  |  |  |  |  |  |  |
|  |  |  |  |  |  |  |  |
| 1 |  |  |  |  |  |  |  |
|  |  |  | 1 |  |  |  |  |
|  |  |  |  |  |  |  |  |
|  |  |  |  |  | 1 | 1 |  |
|  | 1 |  |  | 1 | 1 |  |  |
|  |  |  |  |  |  |  |  |
|  |  |  |  |  |  |  |  |
|  |  |  |  |  |  |  | 1 |
|  |  |  |  |  |  |  |  |
|  |  |  |  |  | 1 |  |  |
|  |  |  |  |  |  |  |  |
|  |  |  |  |  |  |  |  |
|  |  |  |  |  |  |  |  |
|  |  |  |  |  |  |  |  |
|  |  |  |  |  | 1 |  |  |
|  |  |  |  |  | 1 |  |  |
|  |  |  |  |  | 1 |  |  |
|  |  |  |  | 1 |  |  |  |
|  |  |  |  |  | 1 |  |  |
|  |  |  |  |  | 1 |  |  |
|  |  |  | 1 |  |  |  |  |
|  | 1 |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
| 1 | 2 | 2 | 1 | 2 | 11 | 1 | 1 |
|  |  |  |  |  |  |  |  |
| **1%** | **2%** | **2%** | **1%** | **2%** | **13%** | **1%** | **1%** |
| 4% | 7% | 7% | 4% | 7% | 39% | 4% | 4% |

Fig.2C

| | Action | Animation | Aventure | Comedy |
|---|---|---|---|---|
| The monument s men | | | | |
| Girl rising | | | | |
| Blue jasmine | | | | 1 |
| The hobbit : desolation | | | 1 | |
| The turning | | | | |
| Knights of cups | | | | |
| The hobbit : unexpected journey | 1 | | 1 | |
| Hanna | 1 | | 1 | |
| Robin Hood | 1 | | 1 | |
| The real robin hood | | | | |
| Ponyo | | 1 | 1 | |
| Indiana Jones and the kingdom of the crystal skull | 1 | | 1 | |
| benjamin Button | | | | |
| Elisabeth the golden age | | | | |
| Hot Fuzz | 1 | | | 1 |
| I am not there | | | | |
| The good german | | | | |
| Notes on a scandal | | | | |
| babel | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| Total number of occurrences (number of cells having a '1') | 48 | | | |
| | 5 | 1 | 6 | 2 |
| **percentage distribution occurrence ( number of occurrence of this genre/ Total number of occurrences)** | 10% | 2% | 13% | 4% |

Fig.3A

| Crime | Documentary | Drama | Family | Fantasy | Foreign | History | Horror | Indie |
|---|---|---|---|---|---|---|---|---|
|  |  | 1 |  |  |  |  |  |  |
|  | 1 |  |  |  |  |  |  |  |
|  |  |  |  |  |  |  |  |  |
|  |  |  |  | 1 |  |  |  |  |
|  |  | 1 |  |  |  |  |  |  |
|  |  | 1 |  |  |  |  |  |  |
|  |  |  |  | 1 |  |  |  |  |
|  |  |  |  |  |  |  |  |  |
|  |  | 1 |  |  |  |  |  |  |
|  | 1 |  |  |  |  |  | 1 |  |
|  |  |  | 1 |  |  |  |  |  |
|  |  |  |  |  |  |  |  |  |
|  |  | 1 |  | 1 |  |  |  |  |
|  |  | 1 |  |  | 1 | 1 |  |  |
|  |  |  |  |  |  |  |  |  |
|  |  | 1 |  |  |  |  |  |  |
| 1 |  | 1 |  |  |  |  |  |  |
|  |  | 1 |  |  | 1 |  |  |  |
|  |  | 1 |  |  |  |  |  | 1 |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
| 1 | 2 | 10 | 1 | 3 | 2 | 2 | 0 | 1 |
| 2% | 4% | 21% | 2% | 6% | 4% | 4% | 0% | 2% |

Fig.3B

| Music | Mystery | Science Fiction | Sport | Romance | Thriller | War | Western |
|---|---|---|---|---|---|---|---|
|  |  |  |  |  |  | 1 |  |
|  |  |  |  |  |  |  |  |
|  |  |  |  | 1 |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  | 1 |  |  |
|  |  |  |  |  |  |  |  |
|  |  |  |  |  |  |  |  |
|  |  |  |  |  |  |  |  |
|  |  |  |  |  |  |  |  |
|  | 1 |  |  | 1 | 1 |  |  |
|  |  |  |  | 1 |  |  |  |
|  |  |  |  |  |  |  |  |
| 1 |  |  |  |  |  |  |  |
|  | 1 |  |  | 1 | 1 |  |  |
|  |  |  |  | 1 |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
| 1 | 2 | 0 | 0 | 5 | 3 | 1 | 0 |
| 2% | 4% | 0% | 0% | 10% | 6% | 2% | 0% |

Fig.3C

| | Action | Animation | Aventure | Comedy |
|---|---|---|---|---|
| The zero theorem | | | | |
| Snowpiercer | 1 | | | |
| Amore carne | | | | |
| Only lovers left alive | | | | |
| Moonrise kingdom | | | | 1 |
| We need to talk about kelvin | | | | |
| Chronicles of narnia - voyage | | | 1 | |
| I am love | | | | |
| The limit of control | | | | |
| Burn after reading | | | | |
| Burn after reading | | | | 1 |
| Julia | | | | |
| benjamin Button | | | | |
| narnion - prince caspian | 1 | | 1 | |
| the man from london | | | | |
| Mickael clayton | | | | |
| Galapagos | | | | |
| Strange culture | | | | |
| Stephanie daley | | | | |
| Constantine | 1 | | | |
| Broken flowers | | | | 1 |
| Narnia - the lion | | | 1 | |
| Thumbsucker | | | | 1 |
| The statement | | | | |
| Youg Adam | | | | |
| Teknolust | | | | 1 |
| | | | | |
| | | | | |
| | | | | |
| | | | | |
| | | | | |
| | | | | |
| | | | | |
| | | | | |
| | | | | |
| Total number of occurrences (number of cells having a '1') | 74 | | | |
| | 3 | 0 | 3 | 5 |
| percentage distribution occurrence ( number of occurrence of this genre/ Total number of occurrences) | 4% | 0% | 4% | 7% |

Fig.4A

16

| Crime | Documentary | Drama | Family | Fantasy | Foreign | History | Horror | Indie |
|---|---|---|---|---|---|---|---|---|
|  |  |  |  |  |  |  |  |  |
|  |  | 1 |  |  |  |  |  |  |
|  | 1 |  |  |  |  |  |  |  |
|  |  | 1 |  |  |  |  | 1 |  |
|  |  | 1 |  |  |  |  |  |  |
|  |  | 1 |  |  | 1 |  |  |  |
|  |  |  | 1 | 1 |  |  |  |  |
|  |  | 1 |  |  | 1 |  |  |  |
|  |  | 1 |  |  |  |  |  | 1 |
|  |  |  |  |  |  |  |  |  |
|  |  | 1 |  |  |  |  |  |  |
|  |  | 1 |  |  | 1 |  |  |  |
|  |  | 1 |  | 1 |  |  |  |  |
|  |  |  | 1 | 1 |  |  |  |  |
| 1 |  | 1 |  |  | 1 |  |  |  |
|  |  | 1 |  |  |  |  |  |  |
|  | 1 |  |  |  |  |  |  |  |
|  | 1 |  |  |  |  |  |  |  |
|  |  | 1 |  |  |  |  |  | 1 |
|  |  | 1 |  | 1 |  |  | 1 |  |
|  |  | 1 |  |  |  |  |  | 1 |
|  |  |  | 1 | 1 |  |  |  |  |
|  |  | 1 |  |  |  |  |  | 1 |
|  |  | 1 |  |  |  |  |  |  |
| 1 |  | 1 |  |  | 1 |  |  |  |
|  |  | 1 |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
|  |  |  |  |  |  |  |  |  |
| 2 | 3 | 18 | 3 | 5 | 5 | 0 | 2 | 4 |
|  |  |  |  |  |  |  |  |  |
| 3% | 4% | 24% | 4% | 7% | 7% | 0% | 3% | 5% |

Fig.4B

| Music | Mystery | Science Fiction | Sport | Romance | Thriller | War | Western |
|---|---|---|---|---|---|---|---|
|  |  |  |  |  |  |  |  |
|  |  |  |  |  |  |  |  |
|  |  |  |  |  |  |  |  |
|  |  |  |  | 1 |  |  |  |
|  |  |  |  | 1 |  |  |  |
|  |  |  |  |  | 1 |  |  |
|  |  |  |  |  |  |  |  |
|  |  |  |  | 1 |  |  |  |
|  | 1 |  |  | 1 |  |  |  |
|  |  |  |  |  |  |  |  |
|  |  |  |  |  |  |  |  |
|  |  |  |  |  |  |  |  |
|  | 1 |  |  | 1 | 1 |  |  |
|  |  |  |  |  |  |  |  |
|  | 1 |  |  |  | 1 |  |  |
|  | 1 |  |  |  | 1 |  |  |
|  |  |  |  |  |  |  |  |
|  |  |  |  |  |  |  |  |
|  |  |  |  |  |  |  |  |
|  | 1 |  |  |  | 1 |  |  |
|  | 1 |  |  | 1 |  |  |  |
|  |  |  |  |  |  |  |  |
|  |  |  |  |  |  |  |  |
|  |  |  |  |  | 1 |  |  |
|  |  |  |  | 1 | 1 |  |  |
|  |  |  |  | 1 |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
| 0 | 6 | 0 | 0 | 8 | 7 | 0 | 0 |
|  |  |  |  |  |  |  |  |
| 0% | 8% | 0% | 0% | 11% | 9% | 0% | 0% |

Fig.4C

| | Action | Animation | Aventure | Comedy |
|---|---|---|---|---|
| The girl with the dragon tatoo | | | | |
| The social network | | | | |
| The curious case of benjamin button | | | | |
| Zodiac | | | | |
| Panic Room | | | | |
| Fight Club | 1 | | | |
| The Game | | | | |
| Se7En | | | | |
| Dangerous | | | | |
| Alien | 1 | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| | | | | |
| Total number of movies | 28 | | | |
| Total number of occurrences (number of cells having a '1') | 30 | | | |
| occurrences | 2 | 0 | 0 | 0 |
| percentage distribution occurrence ( number of occurrence of this genre/ Total number of occurrences) | 7% | 0% | 0% | 0% |
| percentage compare to the number of movies | 7% | 0% | 0% | 0% |

Fig.5A

19

| Crime | Documentary | Drama | Family | Fantasy | Foreign | History | Horror | Indie |
|---|---|---|---|---|---|---|---|---|
| 1 | | 1 | | | | | | |
| | | 1 | | | | | | |
| | | 1 | | 1 | | | | |
| 1 | | 1 | | | | | | |
| 1 | | 1 | | | | | | |
| | | 1 | | | | | | |
| | | 1 | | | | | | |
| 1 | | | | | | | | |
| | 1 | | | | | | | |
| | | | | | | | 1 | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| 4 | 1 | 7 | 0 | 1 | 0 | 0 | 1 | 0 |
| **13%** | **3%** | **23%** | **0%** | **3%** | **0%** | **0%** | **3%** | **0%** |
| 14% | 4% | 25% | 0% | 4% | 0% | 0% | 4% | 0% |

Fig.5B

| Music | Mystery | Science Fiction | Sport | Romance | Thriller | War | Western | Suspense | Muscical |
|---|---|---|---|---|---|---|---|---|---|
|  | 1 |  |  |  | 1 |  |  |  |  |
|  |  |  |  |  |  |  |  |  |  |
|  | 1 |  |  | 1 | 1 |  |  |  |  |
|  | 1 |  |  |  | 1 |  |  |  |  |
|  |  |  |  |  | 1 |  |  | 1 |  |
|  |  |  |  |  | 1 |  |  |  |  |
|  |  |  |  |  | 1 |  |  |  |  |
|  | 1 |  |  |  | 1 |  |  |  |  |
| 1 |  |  |  |  |  |  |  |  | 1 |
|  |  | 1 |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
|  |  |  |  |  |  |  |  |  |  |
| 1 | 4 | 1 | 0 | 1 | 7 | 0 | 0 |  |  |
|  |  |  |  |  |  |  |  |  |  |
| 3% | 13% | 3% | 0% | 3% | 23% | 0% | 0% |  |  |
| 4% | 14% | 4% | 0% | 4% | 25% | 0% | 0% |  |  |

Fig.5C

| genre TheMovieDB de benjamin button | | | | |
|---|---|---|---|---|
| | | | | |
| Report of the values computed by our method in previous sheets : | | | | |
| | Action | Animation | Aventure | Comedy |
| Brad Pitt | 14 | 3 | 4 | 10 |
| Cate Blanchett | 5 | 1 | 6 | 2 |
| Tilda Switon | 3 | 0 | 3 | 5 |
| (réalisateur) David Fincher | 2 | 0 | 0 | 0 |
| | | | | |
| | | | | |
| | | | | |
| **ReComputed Genres for the movie " benjamin button"** | **24** | **4** | **13** | **17** |
| | | | | |
| Weighted genre based on the genre identifed by the original site (theMovieDB) for this movie : | | | | |
| Weighted genre based on all genre of the site (the movieDB) : | 10% | 2% | 5% | 7% |

Fig.6A

| | | x | | x | | | | |
|---|---|---|---|---|---|---|---|---|
| | | | | | | | | |
| | | | | | | | | |
| Crime | Documentary | **Drama** | Family | **Fantasy** | Foreign | History | Horror | Indie |
| 6 | 1 | **15** | 3 | **5** | 2 | 1 | 1 | 2 |
| 1 | 2 | **10** | 1 | **3** | 2 | 2 | 0 | 1 |
| 2 | 3 | **18** | 3 | **5** | 5 | 0 | 2 | 4 |
| 4 | 1 | **7** | 0 | **1** | 0 | 0 | 1 | 0 |
| | | | | | | | | |
| | | | | | | | | |
| | | | | | | | | |
| **13** | **7** | **50** | **7** | **14** | **9** | **3** | **4** | **7** |
| | | | | | | | | |
| | | **41%** | | **11%** | | | | |
| 5% | 3% | 21% | 3% | 6% | 4% | 1% | 2% | 3% |

Fig.6B

| | x | | | x | x | | | | |
|---|---|---|---|---|---|---|---|---|---|
| | | | | | | | | | |
| | | | | | | | | | |
| Music | **Mystery** | Science Fiction | Sport | **Romance** | **Thriller** | War | Western | | |
| 1 | **2** | 2 | 1 | **2** | **11** | 1 | 1 | | |
| 1 | **2** | 0 | 0 | **5** | **3** | 1 | 0 | | |
| 0 | **6** | 0 | 0 | **8** | **7** | 0 | 0 | | |
| 1 | **4** | 1 | 0 | **1** | **7** | 0 | 0 | | |
| | | | | | | | | | |
| | | | | | | | | | |
| | | | | | | | | | |
| **3** | **14** | **3** | **1** | **16** | **28** | **2** | **1** | | **240** |
| | | | | | | | | | |
| | **11%** | | | **13%** | **23%** | | | | **100%** |
| 1% | 6% | 1% | 0% | 7% | 12% | 1% | 0% | | 100% |

Fig.6C

| | Action | Animation | Aventure |
|---|---|---|---|
| Recomputed Genre of benjamin button | 24 | 4 | 13 |
| Movie 2 | 12 | 5 | 14 |
| | | | |
| Square deviation (carré des écarts in french) | 144 | 1 | 1 |
| distance (sum of squared deviations) (somme des carrés des écarts) | 519 | | |
| | | | |
| absolute value of the difference | 12 | 1 | 1 |
| distance(sum of the differences in absolute value) | 73 | | |
| | | | |
| | | | |
| Square of sum of squarred deviations | **22.7815715** | | |

Fig.7A

| Comedy | Crime | Documentary | Drama | Family | Fantasy | Foreign | History | Horror |
|---|---|---|---|---|---|---|---|---|
| 17 | 13 | 7 | 50 | 7 | 14 | 9 | 3 | 4 |
| 12 | 3 | 9 | 40 | 9 | 11 | 10 | 0 | 0 |
| | | | | | | | | |
| 25 | 100 | 4 | 100 | 4 | 9 | 1 | 9 | 16 |
| | | | | | | | | |
| | | | | | | | | |
| 5 | 10 | 2 | 10 | 2 | 3 | 1 | 3 | 4 |
| | | | | | | | | |
| | | | | | | | | |
| | | | | | | | | |
| | | | | | | | | |

Fig.7B

| Indie | Music | Mystery | Science Fiction | Sport | Romance | Thriller | War | Western |
|---|---|---|---|---|---|---|---|---|
| 7 | 3 | 14 | 3 | 1 | 16 | 28 | 2 | 1 |
| 6 | 2 | 8 | 2 | 1 | 16 | 20 | 1 | 0 |
| | | | | | | | | |
| 1 | 1 | 36 | 1 | 0 | 0 | 64 | 1 | 1 |
| | | | | | | | | |
| | | | | | | | | |
| 1 | 1 | 6 | 1 | 0 | 0 | 8 | 1 | 1 |
| | | | | | | | | |
| | | | | | | | | |
| | | | | | | | | |
| | | | | | | | | |

Fig.7C

Computer device

~800

| Processor |
| 810 |

| Memory |
| 820 |

| UI |
| 830 |

Fig.8

Europäisches
Patentamt

European
Patent Office

Office européen
des brevets

# EUROPEAN SEARCH REPORT

Application Number

EP 13 30 6709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/138505 A1 (PURDY SEAN [US]) 28 May 2009 (2009-05-28) * abstract; figures 1,4,8,9 * * paragraphs [0003], [0004] * * paragraphs [0016] - [0018] * * paragraphs [0026] - [0028] * * paragraphs [0044] - [0046] * ----- | 1-14 | INV. G06F17/30 |
| A | WO 2013/001326 A1 (THOMSON LICENSING [FR]; ENGELI SEVERIN WERNER [CH]; BOZZINI ROGER DOMI) 3 January 2013 (2013-01-03) * abstract; figures 10-12 * * pages 15-28 * ----- | 1-14 | |
| A | AUCOUTURIER J-J ET AL: "MUSIC SIMILARITY MEASURES: WHAT'S THE USE?", PROCEEDINGS ANNUAL INTERNATIONAL SYMPOSIUM ON MUSIC INFORMATION RETRIEVAL, 1 October 2002 (2002-10-01), pages 1-7, XP008014098, * page 3, paragraph 3.2; table 2 * ----- | 1-14 | |

TECHNICAL FIELDS
SEARCHED       (IPC)

G06F

The present search report has been drawn up for all claims

| Place of search | Date of completion of the search | Examiner |
|---|---|---|
| Munich | 16 May 2014 | Laurentowski, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 30 6709

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2014

| Patent document cited in search report | Publication date | Patent family member(s) | Publication date |
|---|---|---|---|
| US 2009138505 A1 | 28-05-2009 | CN 101446949 A<br>US 2009138505 A1<br>US 2012278342 A1 | 03-06-2009<br>28-05-2009<br>01-11-2012 |
| WO 2013001326 A1 | 03-01-2013 | CN 103621105 A<br>EP 2727373 A1<br>WO 2013001326 A1 | 05-03-2014<br>07-05-2014<br>03-01-2013 |

EPO FORM P0459

For more details about this annex : see Official Journal of the European Patent Office, No. 12/82